# EUROPÄISCHE PATENTANMELDUNG

(11) **EP 2 371 539 A1**
(43) Veröffentlichungstag der Anmeldung: **05.10.2011**
(21) Anmeldenummer: 10405070.3
(22) Anmeldetag: 31.03.2010
(51) Int. Cl.: B32B 27/08, B32B 27/32, B32B 27/36, B65D 65/40, B65D 81/00, B65D 81/24

(54) **Verpackungslaminat**

(71) Anmelder: Amcor Flexibles Kreuzlingen Ltd., 8280 Kreuzlingen (CH)
(72) Erfinder: Nägeli, Hans Rudolf, 8212 Neuhausen (CH); Hombach, Franz Peter, 8222 Beringen (CH); Fessler, Thomas, 78467 Konstanz (DE); Herman, Simone, 78462 Konstanz (DE)
(74) Vertreter: Burkhart, Hans

(57) **Zusammenfassung**

Eine sterilisierbare und migrationsarme Kunststofffolie (10A, 10B) mit Durchtrittssperrwirkung für Wasserdampf und Gase weist einen ersten Film (12) aus Polyethylenterephthalat (PET), eine auf dem PET-Film (12) angeordnete Barriereschicht (14) aus Siliziumoxid (SiOₓ), mit Durchtrittssperrwirkung für Wasserdampf und Gase, und eine auf der SiOₓ -Schicht (14) angeordnete Ormocer-Schicht (20) auf. Ein zweiter Film (18) aus Polypropylen (PP) ist über eine polymere Haftvermittlerschicht (16) oder zwei polymere Haftvermittlerschichten (16, 17) mit zwischen diesen angeordneter Schicht (24) aus Polyamid gegen die mit dem Ormocer beschichteten Seite des PET-Films (12) extrusions- bzw. coextrusionskaschiert.

## Beschreibung

Die Erfindung betrifft ein Verpackungslaminat mit einem ersten Film aus Polyethylenterephthalat (PET), einer auf dem PET-Film angeordneten Barriereschicht aus Siliziumoxid (SiOₓ), mit Durchtrittssperrwirkung für Wasserdampf und Gase, und einem auf der mit SiOₓ beschichteten Seite des PET-Films angeordneten und mit dem PET-Film über eine Zwischenschicht oder zwei Zwischenschichten mit zwischen diesen angeordneter Schicht aus Polyamid verbundenen zweiten Film aus Polypropylen (PP). Im Rahmen der Erfindung liegt auch ein Verfahren zur Herstellung des Verpackungslaminates sowie aus dem Verpackungslaminat gefertigte Verpackungen, insbesondere Beutel.

Bei der Peritonealdialyse wird mittels eines Beutelsystems eine Dialysierflüssigkeit in die Bauchhöhle eines Patienten eingebracht. Die Flüssigkeit gelangt in das Bauchfell, welches als Filter fungiert und so die Reinigung von Stoffwechselgiften übernehmen kann. Den Flüssigkeitswechsel kann der Patient - im Gegensatz zur Dialysiermaschine - zu Hause oder unterwegs selbständig durchführen.

Das heute zur Herstellung von Dialysebeuteln eingesetzte Folienmaterial besteht aus einem äusseren Film aus Polyethylenterephthalat (PET) und einem inneren Film aus Polypropylen (PP). Der auf der Innenseite mit einer Gasbarriere aus Siliziumoxid (SiOₓ) ausgestattete PET-Film ist über einen Zweikomponentenkleber für Sterilanwendungen auf Polyurethanbasis mit dem PP-Film verklebt. Bei grösseren Beuteln bedarf es noch einer zusätzlichen stabilisierenden Zwischenschicht, damit die an die mechanischen Eigenschaften bei starker Stossbeanspruchung gestellten Anforderungen erfüllt werden. Heute besteht dese Schicht aus einem Film aus orientiertem Polyamid (oPA), der über einen Zweikomponentenkleber für Sterilanwendungen auf Polyurethanbasis zwischen den mit SiOₓ beschichteten PET-Film und den PP-Film kaschiert wird.

Die Migration von Fremdstoffen aus den Kleberschichten durch den PP-Film in die Dialysierflüssigkeit im Beutel vermag den immer strenger werdenden Anforderungen an die Reinheit von Dialysierlösungen kaum mehr zu genügen.

Der Erfindung liegt die Aufgabe zugrunde, ein Verpackungslaminat der eingangs genannten Art zu schaffen, welches transparent, migrationsarm und sterilisationsbeständig ist und sich zur Herstellung von Verpackungen für Lebensmittelanwendungen, insbesondere Beutel, sowie für Beutel zur Aufnahme von Dialyselösungen eignet. Das Verpackungslaminat soll im Vergleich zu den aus dem Stand der Technik bekannten Laminaten bei gleich bleibender Sterilisationsbeständigkeit eine verringerte Migration aufweisen.

Zur erfindungsgemässen Lösung der Aufgabe führt, dass auf der Barriereschicht aus SiOₓ eine Schicht aus einem anorganisch-organischen Hybridpolymer (Ormocer-Schicht) angeordnet ist und der PP-Film über einen polymeren Haftvermittler als Zwischenschicht oder zwei polymere Haftvermittler als Zwischenschichten mit zwischen diesen angeordneter Schicht aus Polyamid gegen die mit dem Ormocer beschichtete Seite des PET-Films extrusions- bzw. coextrusionskaschiert ist.

Der wesentliche Kern der Erfindung liegt in der Kombination der Barriereschicht aus SiOₓ mit der Ormocer-Schicht in Verbindung mit der Extrusionskaschierung des Haftvermittlers, die insgesamt zu einer Folie mit guten Barriereeigenschaften und ausgezeichneter mechanischer Beständigkeit unter Sterilisationsbedingungen führt und insbesondere die für Dialysebeutel geforderte Migrationsfreiheit aufweist.

Die Barriereschicht aus SiOₓ weist bevorzugt eine Dicke von etwa 50 bis 100 nm auf und kann beispielsweise durch Vakuumdünnschichtverfahren, wie physikalische Beschichtungsverfahren (PVD-Verfahren) oder chemische Beschichtungsverfahren (CVD-Verfahren), mit und ohne Plasmaunterstützung, oder durch Sputtern aufgebracht werden. Als Barriereschicht aus SiOₓ geeignet ist beispielsweise eine Beschichtung aus CERAMIS^{®} CPT006 auf einem PET-Film. Die bevorzugte Dicke des PET-Films liegt zwischen 10 µm und 30 µm, Standarddicken sind 12 µm und 23 µm.

Die Ormocer-Schicht wird als Lack appliziert und anschliessend thermisch oder durch photochemische oder thermische Induktion ausgehärtet. Das Flächengewicht der Ormocer-Schicht liegt bevorzugt bei etwa 0,5 bis 1 g/m². Beispiele von Ormocer-Lacken sind u. a. in der EP 0 792 846 B1 beschrieben.

Bevorzugt wird die Ormocer-Schicht mit einem Primer, insbesondere mit einem wasserbasierten Primer aus Polyethylenimin (PEI) oder Silikat beschichtet. Das bevorzugte Flächengewicht der Primerbeschichtung liegt bei etwa 0,05 bis 1 g/m². Vorzugsweise erfolgt die Applikation des Primers inline zusammen mit der Extrusionskaschierung.

Ein bevorzugter Haftvermittler ist ein mit Maleinsäureanhydrid gepfropftes Polypropylen (PP-MAH). Die bevorzugte Schichtdicke liegt bei 10 bis 40 µm.

Die bevorzugte Dicke des PP-Films liegt bei 100 bis 180 µm. Der PP -Film kann gemäss den Bedürfnissen der Endanwendung modifiziert sein und beispielsweise eine signifikante Menge an elastischen Komponenten, wie z. B. Styrol-Ethylen-Butylene-Styrol (SEBS) -Triblockpolymer, zur Verbesserung der Schlagzähigkeit enthalten.

Das erfindungsgemässe Verpackungslaminat eignet sich Lebensmittelanwendungen aller Art, insbesondere für Beutel, sowie für Beutel zur Aufnahme von Dialyse- und Infusionslösungen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau eines ersten Verpackungslaminates nach dem Stand der Technik;
- Fig. 2: den Schichtaufbau eines ersten erfindungsgemässen Verpackungslaminates;
- Fig. 3: den Schichtaufbau eines zweiten Verpackungslaminates nach dem Stand der Technik;
- Fig. 4: den Schichtaufbau eines zweiten erfindungsgemässen Verpackungslaminates.

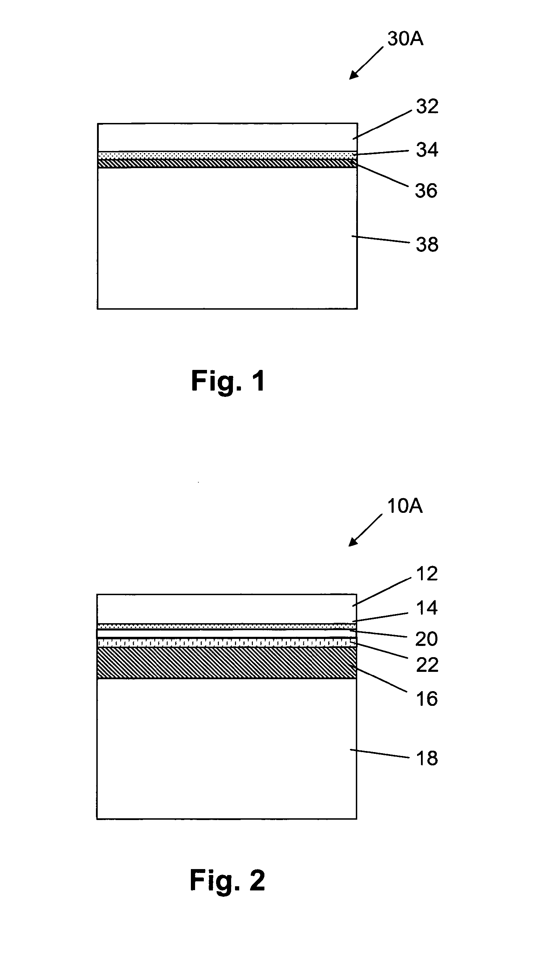

Eine erste nach dem Stand der Technik zur Herstellung von Dialysebeuteln verwendete, sterilisierbare Kunststofffolie 30A weist gemäss Fig. 1 von aussen nach innen -- den folgenden Schichtaufbau auf:
- 32: PET-Film
- 34: Barriereschicht aus SiOₓ
- 36: Zweikomponentenkleber auf Polyurethanbasis für Sterilanwendungen
- 38: PP-Film

Bei der Herstellung der Kunststofffolie 30A wird zunächst der PET-Film 32 mit der Barriereschicht 34 aus SiOₓ versehen. Nach erfolgtem Auftrag des Klebers 36 auf den mit SiOₓ beschichteten PET-Film 32 oder auf den PP-Film 38 werden die beiden Filme 32, 38 miteinander zu der Kunststofffolie 30 verbunden und der Kleber 36 wird ausgehärtet.

Eine erste zur Herstellung von Dialysebeuteln geeignete, sterilisierbare und migrationsarme Kunststofffolie 10A nach der Erfindung weist gemäss Fig. 2 von aussen nach innen -- den folgenden Schichtaufbau auf:
- 12: PET-Film
- 14: Barriereschicht aus SiOₓ
- 20: Ormocer-Schicht
- 22: Primer, z. B. Polyethylenimin (PEI) oder Silikat wasserbasiert
- 16: Haftvermittler, z. B. ein mit Maleinsäureanhydrid gepfropftes Polypropylen (PP-MAH)
- 18: PP-Film

Bei der Herstellung der Kunststofffolie 10A wird zunächst der PET-Film 12 mit der Barriereschicht 14 aus SiO_{X} versehen. Auf die Barriereschicht 14 aus **SiOₓ** erfolgt die Applikation eines Ormocer-Lackes, der nach dem Aushärten die Ormocer-Schicht 20 bildet. Auf die Ormocer-Schicht 20 wird anschliessend der Primer 22 appliziert. Der auf diese Weise beschichtete PET-Film 12 wird sodann über den extrudierten Haftvermittler 16 gegen den PP-Film 18 extrusionskaschiert. Die Applikation des Primers 22 erfolgt vorzugsweise inline mit der Extrusionskaschierung.

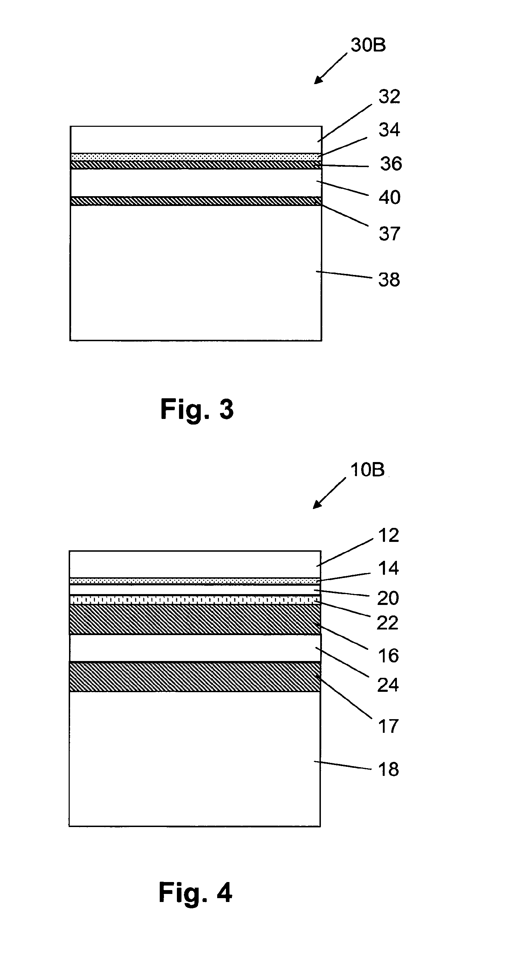

Eine zweite nach dem Stand der Technik zur Herstellung von Dialysebeuteln verwendete, sterilisierbare Kunststofffolie 30B weist gemäss Fig. 3 von aussen nach innen -- den folgenden Schichtaufbau auf:
- 32: PET-Film
- 34: Barriereschicht aus SiOₓ
- 36: Zweikomponentenkleber auf Polyurethanbasis für Sterilanwendungen
- 40: oPA-Film
- 37: Zweikomponentenkleber auf Polyurethanbasis für Sterilanwendungen
- 38: PP-Film

Bei der Herstellung der Kunststofffolie 30B wird zunächst der PET-Film 32 mit der Barriereschicht 34 aus SiOₓ versehen. Auf den PP-Film 38 wird der Kleber 37 aufgetragen und der PP-Film 38 wird mit dem oPA-Film 40 verklebt. Nach erfolgtem Auftrag des Klebers 36 auf den mit SiOₓ beschichteten PET-Film 32 oder auf den oPA-Film 40 erfolgt das Verkleben zu der Kunststofffolie 30B verbunden und die Kleber 36, 37 werden ausgehärtet.

Eine zweite zur Herstellung von Dialysebeuteln geeignete, sterilisierbare und migrationsarme Kunststofffolie 10B nach der Erfindung weist gemäss Fig. 4 von aussen nach innen -- den folgenden Schichtaufbau auf:
- 12: PET-Film
- 14: Barriereschicht aus SiOₓ
- 20: Ormocer-Schicht
- 22: Primer, z. B. Polyethylenimin (PEI) oder Silikat wasserbasiert
- 16: Haftvermittler, z. B. ein mit Maleinsäureanhydrid gepfropftes Polypropylen (PP-MAH)
- 24: PA-Schicht, z. B. aus PA6, PA6.6 oder ähnlich
- 17: Haftvermittler, z. B. ein mit Maleinsäureanhydrid gepfropftes Polypropylen (PP-MAH)
- 18: PP-Film

Bei der Herstellung der Kunststofffolie 10B wird zunächst der PET-Film 12 mit der Barriereschicht 14 aus SiOₓ versehen. Auf die Barriereschicht 14 aus SiOₓ erfolgt die Applikation eines Ormocer-Lackes, der nach dem Aushärten die Ormocer-Schicht 20 bildet. Auf die Ormocer-Schicht 20 wird anschliessend der Primer 22 appliziert. Der auf diese Weise beschichtete PET-Film 12 wird sodann über die coextrudierte Schicht bestehend aus Haftvermittler 16 / PA-Schicht / Haftvermittler 17 gegen den PP-Film 18 extrusionskaschiert. Die Applikation des Primers erfolgt vorzugsweise inline mit der Extrusionskaschierung.

## Patentansprüche

1. Verpackungslaminat mit einem ersten Film (12) aus Polyethylenterephthalat (PET), einer auf dem PET-Film (12) angeordneten Barriereschicht (14) aus Siliziumoxid (SiOₓ), mit Durchtrittssperrwirkung für Wasserdampf und Gase, und einem auf der mit SiOₓ beschichteten Seite des PET-Films (12) angeordneten und mit dem PET-Film (12) über eine Zwischenschicht (16) oder zwei Zwischenschichten (16, 17) mit zwischen diesen angeordneter Schicht (24) aus Polyamid (PA) verbundenen zweiten Film (18) aus Polypropylen (PP),
**dadurch gekennzeichnet, dass**
auf der Barriereschicht (14) aus SiOₓ eine Schicht (20) aus einem anorganisch-organischen Hybridpolymer (Ormocer-Schicht) angeordnet ist und der PP-Film (18) über einen polymeren Haftvermittler als Zwischenschicht (16) oder zwei polymere Haftvermittler als Zwischenschichten (16, 17) mit zwischen diesen angeordneter Schicht (24) aus Polyamid (PA) gegen die mit dem Ormocer beschichtete Seite des PET-Films (12) extrusions- bzw. coextrusionskaschiert ist.

2. Verpackungslaminat nach Anspruch 1, **dadurch gekennzeichnet, dass** die Ormocer-Schicht (20) mit einem Primer (22) beschichtet ist.

3. Verpackungslaminat nach Anspruch 2, **dadurch gekennzeichnet, dass** die Ormocer-Schicht (20) mit einem wasserbasierten Primer (22) aus Polyethylenimin (PEI) oder Silikat beschichtet ist.

4. Verpackungslaminat nach einem der Ansprüche 1 bis 3, **dadurch gekennzeichnet, dass** der/die Haftvermittler (16, 17) ein mit Maleinsäureanhydrid gepfropftes Polypropylen (PP-MAH) ist/sind.

5. Verfahren zur Herstellung eines Verpackungslaminates mit Durchtrittssperrwirkung für Wasserdampf und Gase, mit einem ersten Film (12) aus Polyethylenterephthalat (PET), einer auf dem PET-Film (12) angeordneten Barriereschicht (14) aus Siliziumoxid (SiOₓ) und einem auf der mit SiOₓ beschichteten Seite des PET-Films (12) angeordneten und mit dem PET-Film (12) über eine Zwischenschicht (16) oder zwei Zwischenschichten (16, 17) mit zwischen diesen angeordneter Schicht (24) aus Polyamid verbundenen zweiten Film (18) aus Polypropylen (PP),
**dadurch gekennzeichnet, dass**
auf der Barriereschicht (14) aus SiOₓ eine Schicht (20) aus einem anorganisch-organischen Hybridpolymer (Ormocer-Schicht) angeordnet ist und der PP-Film (18) über einen polymeren Haftvermittler als Zwischenschicht (16) oder zwei polymere Haftvermittler als Zwischenschichten (16, 17) mit zwischen diesen angeordneter Schicht (24) aus Polyamid (PA) gegen die mit dem Ormocer beschichtete Seite des PET-Films (12) extrusions- bzw. coextrusionskaschiert wird.

6. Verfahren nach Anspruch 5, **dadurch gekennzeichnet, dass** die Ormocer-Schicht (20) mit einem Primer (22) beschichtet ist.

7. Verfahren nach Anspruch 6, **dadurch gekennzeichnet, dass** die Ormocer-Schicht (20) mit einem wasserbasierten Primer (22) aus Polyethylenimin (PEI) oder Silikat beschichtet ist.

8. Verfahren nach Anspruch 6 oder 7, **dadurch gekennzeichnet, dass** die Applikation des Primers (22) inline zusammen mit der Extrusionskaschierung erfolgt.

9. Verfahren nach einem der Ansprüche 5 bis 8, **dadurch gekennzeichnet, dass** der/die Haftvermittler (16, 17) ein mit Maleinsäureanhydrid gepfropftes Polypropylen (PP-MAH) ist/sind.

10. Verwendung eines Verpackungslaminates nach einem der Ansprüche 1 bis 4 oder hergestellt mit dem Verfahren nach einem der Ansprüche 5 bis 9 für Lebensmittelanwendungen, insbesondere für Beutel, sowie für Beutel zur Aufnahme von Dialyse- und Infusionslösungen.
